# EUROPÄISCHE PATENTANMELDUNG

(11) **EP 2 728 523 A1**
(43) Veröffentlichungstag der Anmeldung: **07.05.2014**
(21) Anmeldenummer: 13183323.8
(22) Anmeldetag: 06.09.2013
(51) Int. Cl.: G06Q 10/06

(54) **Assistenzsystem zur Optimierung des Fahrzeugbetriebes**

(30) Priorität: 05.11.2012 DE 102012021469
(71) Anmelder: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Neu, Sebastian, 49196 Bad Laer (DE); Heitmann, Christoph, 48231 Warendorf (DE)

(57) **Zusammenfassung**

Die Erfindung betrifft ein Assistenzsystem (35) zur Optimierung des Betriebes einer selbstfahrenden landwirtschaftlichen Arbeitsmaschine (1), insbesondere Mähdrescher oder Feldhäcksler, zumindest eine Einrichtung zur Ermittlung von Arbeits- und Effizienzparametern (34, 37) der landwirtschaftlichen Arbeitsmaschine (1), eine Recheneinheit (27) und zumindest eine Anzeigeeinheit (22) umfassend, wobei die Recheneinheit (27) von maschineninternen Sensorsystemen (26) generierte Informationen (28), externe Informationen (29) und in der Recheneinheit (27) hinterlegbare Informationen verarbeitet, wobei in der Recheneinheit (27) ein oder mehrere, den Arbeitsprozess (62) der landwirtschaftlichen Arbeitsmaschine (1) beschreibende mathematische Modelle (39) hinterlegt sind, das oder die mathematischen Modelle (39) aus den verfügbaren Arbeitsparametern (34) Effizienzparameter (37) der Arbeitsmaschine (1) ableiten und unter Berücksichtigung monetärer Zusammenhänge (44) die Opportunitätskosten (61) des Arbeitsprozesses (62) ermitteln und die Opportunitätskosten (61) in der Anzeigeeinheit (22) visualisiert werden.

## Beschreibung

Die Erfindung betrifft ein Assistenzsystem zur Optimierung des Betriebes einer selbstfahrenden landwirtschaftlichen Arbeitsmaschine nach dem Oberbegriff des Anspruchs 1.

Aus der DE 101 47 733 ist ein Fahrerassistenzsystem bekannt geworden, welches den Bediener einer landwirtschaftlichen Arbeitsmaschine bei der Optimierung der Arbeitsparameter der Arbeitsorgane unterstützt. Das Fahrerassistenzsystem umfasst neben einer komplexen Anzeigeeinheit eine Recheneinheit zur Verarbeitung diverser Sensorsignale. Die als Mähdrescher ausgeführte landwirtschaftliche Arbeitsmaschine umfasst eine Vielzahl von Arbeitsorganen, wie etwa ein Schneidwerk, eine Drescheinrichtung, Trennorgane und zumindest eine Reinigungseinrichtung, die mit einer Vielzahl von Sensiereinrichtungen gekoppelt sind, die neben Arbeitsparametern der Arbeitsorgane auch Effizienzparameter der landwirtschaftlichen Arbeitsmaschine, wie etwa Kornverlust, Kornqualität und Überkehrmenge detektieren können.

Die von den Sensiereinrichtungen ermittelbaren Informationen werden der zentralen Recheneinheit zugeführt, die dann aus diesen Signalen in der Anzeigeinrichtung visualisierbare Informationen ableitet. Die visualisierten Informationen umfassen neben Arbeitsparametern der landwirtschaftlichen Arbeitsmaschine, etwa die Dreschtrommeldrehzahl, die Reinigungsgebläsedrehzahl, den Erntegutdurchsatz, die Dreschkorbweite, auch Effizienzparameter, wie etwa die Kornverluste der Reinigungs- und der Trenneinrichtung. Zur Optimierung der verschiedenen Arbeitsparameter wird in der DE 101 47 733 nun eine Methode vorgeschlagen, bei der der Bediener die landwirtschaftliche Arbeitsmaschine in einem ersten Verfahrensschritt mit einer auf den zu erwartenden Erntegutdurchsatz abgestimmten Fahrgeschwindigkeit durch den zu erntenden Bestand führt, sodass der Mähdrescher in einem bestimmten Zeitintervall mit einer nahezu gleichbleibenden Erntegutmenge beaufschlagt wird. Der Bediener hat nun zunächst abzuwarten, dass der Mähdrescher einen sogenannten eingeschwungenen Zustand erreicht, bei dem ein annähernd gleichbleibendes, gutes oder schlechtes Arbeitsergebnis erzielt wird. Dieses Arbeitsergebnis wird aufgezeichnet und dem Bediener in der Anzeigeeinheit visualisiert. Stellt sich ein unbefriedigendes Arbeitsergebnis ein, ändert der Bediener des Mähdreschers zunächst einen erfolgversprechenden Arbeitsparameter eines Arbeitsorgans mehrmals und wartet jeweils die Einschwingphase des Mähdreschers mit dem geänderten Arbeitsparameter ab. Alle Arbeitsergebnisverläufe werden aufgezeichnet, sodass der Bediener schließlich entscheiden kann, bei welchem konkreten Wert des Arbeitsparameters das beste Arbeitsergebnis erzielt wurde. Dieser konkrete Wert wird dann an dem jeweiligen Arbeitsorgan eingestellt, sodass sich schließlich ein verbessertes Arbeitsergebnis der landwirtschaftlichen Arbeitsmaschine einstellt.

Eine derartige Methode hat vor allem den Nachteil, dass ein relativ großer Zeitraum benötigt wird, bis die verschiedenen Arbeitsparameter des Mähdreschers in einem optimierten Parameterbereich arbeiten, da für jeden Arbeitsparmeter die offenbarte Einstellprozedur abgearbeitet werden muss. Zudem hängt eine schnelle und zielführende Optimierung bei einer derart strukturierten Einstellmethode maßgeblich von dem Kenntnisstand des Bedieners der landwirtschaftlichen Arbeitsmaschine ab, da sich die verschiedenen Arbeitsparameter mitunter über sehr komplexe Wechselwirkungen gegenseitig beeinflussen.

Weiter ist aus der EP 2 220 926 ein Fahrerassistenzsystem bekannt geworden, welches eine optimale Arbeitsmaschineneinstellung bewirkt, ohne dass der Bediener der Arbeitsmaschine unmittelbar in den Optimierungsprozess eingreifen muss und dennoch permanent über die ablaufenden Optimierungsvorgänge informiert ist. Ein derartig strukturiertes Fahrerassistenzsystem ermöglicht eine schnelle Einstellung optimaler Maschinenparameter, sodass sich die auf den Erntegutverlust bezogenen Effizienzparameter stets in einem optimalen Bereichen bewegen.

Weiter ist aus der EP 1 321 024 ein Verfahren zur Optimierung des Betriebes einer selbstfahrenden landwirtschaftlichen Arbeitsmaschine bekannt geworden, welches im Betrieb der landwirtschaftlichen Arbeitsmaschine neben der Optimierung ihrer Effizienzparameter auch ökonomische Parameter der landwirtschaftlichen Arbeitsmaschine, wie etwa Kraftstoffkosten und Kosten der Kornverluste, für den laufenden Betrieb ermittelt. Obgleich ein derartiges System in der Lage ist die landwirtschaftliche Erntemaschine für festgelegte Maschinenparameter in einem betriebskostenoptimierten Durchsatzbereich zu betreiben, ist ein solches Verfahren nicht in der Lage den Betrieb der landwirtschaftliche Arbeitsmaschine in Abhängigkeit von anfallenden Betriebskosten in der Weise zu optimieren, dass die Maschinenparameter betriebskostenabhängig optimiert werden.

Es ist deshalb Aufgabe der Erfindung die beschriebenen Nachteile des Standes der Technik zu vermeiden und insbesondere ein Assistenzsystem zur Optimierung der Effizienz einer landwirtschaftlichen Arbeitsmaschine vorzuschlagen, welches innerhalb kürzester Zeit eine Betriebskosten-optimierte Arbeitsweise der landwirtschaftlichen Arbeitsmaschine sicherstellt.

Diese Aufgabe wird erfindungsgemäß durch die kennzeichnenden Merkmale des Anspruchs 1 gelöst.

Indem das Assistenzsystem zumindest eine Steuer- und Regeleinrichtung, eine Rechen- und Anzeigeeinheit umfassend aufweist und in der Recheneinheit ein oder mehrere, den Arbeitsprozess der landwirtschaftlichen Arbeitsmaschine beschreibende mathematische Modelle hinterlegt sind, wobei das oder die mathematischen Modelle aus den verfügbaren Arbeitsparametern Effizienzparameter der Arbeitsmaschine ableiten und unter Berücksichtigung monetärer Zusammenhänge die Opportunitätskosten des Arbeitsprozesses ermitteln und die Opportunitätskosten in der Anzeigeeinrichtung visualisiert werden, wird sichergestellt, dass innerhalb kürzester Zeit eine Betriebskosten-optimierte Arbeitsweise der landwirtschaftlichen Arbeitsmaschine ermöglicht wird.

Das erfindungsgemäße Assistenzsystem kann in einer vorteilhaften Ausgestaltung der Erfindung dann hochflexibel eingesetzt werden, wenn die Opportunitätskosten im laufenden Arbeitsprozess und/oder als Simulation vor Durchführung des Arbeitsprozesses ermittelbar sind.

Damit eine genau Analyse der zu ermittelnden Opportunitätskosten möglich wird ist in einer weiteren vorteilhaften Ausgestaltung der Erfindung vorgesehen, dass der Arbeitsprozess in Teilarbeitsprozesse unterteilt ist und für jeden Teilarbeitsprozess die Teilopportunitätskosten und die aus der Summe der Teilopportunitätskosten gebildeten Opportunitätskosten ermittelt und visualisiert werden.

Indem das Assistenzsystem optimierte Arbeitsparameter unter Berücksichtigung der ermittelten Teilopportunitätskosten und/oder Gesamtopportunitätskosten vorschlägt, wird zudem sichergestellt, dass der Bediener von spezifischen Analysen der Opportunitätskosten entlastet und eine schnelle Kostenoptimierung der landwirtschaftlichen Arbeitsmaschine erreicht wird.

Die Optimierung der Opportunitätskosten wird umso effektiver sein, je mehr Informationen zur ihrer Optimierung herangezogen werden. Daher ist in einer weiteren vorteilhaften Ausgestaltung der Erfindung vorgesehen, dass die hinterlegten mathematischen Modelle historische und/oder aktuelle Arbeitsparameter der landwirtschaftlichen Arbeitsmaschine berücksichtigen.

Ein hochflexibler Einsatz des erfindungsgemäßen Assistenzsystems ergibt sich dann, wenn das Assistenzsystem sowohl auf der landwirtschaftlichen Arbeitsmaschine als auch in einer stationären Einrichtung anwendbar ist. Auf diese Weise kann die Kostenoptimierung entweder im Online-Betrieb oder vorab in Form einer Simulation vorgenommen werden.

Ein besonders hoher monetärer Effekt stellt sich mit dem erfindungsgemäßen Assistenzsystem dann ein, wenn die landwirtschaftliche Arbeitsmaschine als Erntemaschine ausgeführt ist und der von dem oder den mathematischen Modellen beschriebene Arbeitsprozess der Ernteprozess ist.

Die Qualität der zu ermittelnden Opportunitätskosten wird auch dadurch erhöht, dass die Arbeitsparameter Einstellparameter der landwirtschaftlichen Arbeitsmaschine und den Erntegutdurchsatz umfassen. In landwirtschaftlichem Kontext erhöht sich die Qualität der Opportunitätskosten auch dadurch, wenn gemäß einer weiteren vorteilhaften Ausgestaltung der Erfindung die landwirtschaftliche Arbeitsmaschine als Mähdrescher ausgeführt ist und die Effizienzparameter zumindest einen oder mehrere der Effizienzparameter "Abscheideverlust", "Reinigungsverlust", "Kornsauberkeit", "unausgedroschene Bestandteile im Korntank", "Körnerbruch" und "Kraftstoffverbrauch" umfassen.

Indem zur Beschreibung der monetären Zusammenhänge einer oder mehrere der Parameter "Preis des zu erntende Gutes" ; "Kraftstoffpreis" ; "Ertrag des geernteten Gutes" und die "Flächenleistung der landwirtschaftlichen Arbeitsmaschine" berücksichtigt werden, lassen sich aus den ermittelten Effizienzparametern auf einfache Weise die Opportunitätskosten ableiten.

Eine besonders aussagefähige Darstellung der ermittelten Opportunitätskosten ergibt sich in einer vorteilhaften Ausgestaltung der Erfindung dann, wenn in dem oder den mathematischen Modellen zumindest die Effizienzparameter unter Berücksichtigung der die monetären Zusammenhänge beschreibenden Parameter die Teilopportunitätskosten und/oder die Gesamtopportunitätskosten "Abscheideverlust in Kosten/Zeit- oder Flächeneinheit", "Reinigungsverlust in Kosten/Zeit- oder Flächeneinheit", "Kornsauberkeit in Kosten/Zeit- oder Flächeneinheit", "Körnerbruch in Kosten/Zeit- oder Flächeneinheit", "unausgedroschene Bestandteile im Korntank" in Kosten/Zeit- oder Flächeneinheit" und "Kraftstoffverbrauch in Kosten/Zeit- oder Flächeneinheit" ermittelt und sodann visualisiert werden.

Eine gute Beurteilung des Arbeitsprozesses der landwirtschaftlichen Arbeitsmaschine ergibt sich dann, wenn die ermittelten Teilopportunitätskosten zu den gesamten Arbeitsprozess beschreibenden Opportunitätskosten zusammengefasst werden, wobei die ermittelten Opportunitätskosten dann besonders aussagefähig sind, wenn die Teilopportunitätskosten und/oder die den gesamten Arbeitsprozess beschreibenden Opportunitätskosten in Kosten pro Stunde oder Kosten pro bearbeitete Fläche visualisiert werden.

Eine weitere Verbesserung der zu ermittelnden Opportunitätskosten wird dann erreicht, wenn gemäß einer weiteren Ausgestaltung der Erfindung das oder die mathematischen Modelle einsatzspezifische Randbedingungen des Arbeitsprozesses berücksichtigen. Eine besondere Bedeutung kommt dabei dem Verhältnis von zu bearbeitender Restfläche und der möglichen Flächenleistung der eingesetzten landwirtschaftlichen Arbeitsmaschine zu. In einer vorteilhaften Weiterbildung der Erfindung wird daher vorgeschlagen, dass eine einsatzspezifische Randbedingung das Verhältnis von zu bearbeitender Fläche und möglicher Flächenleistung der Arbeitsmaschine ist, wobei eine große zu bearbeitende Fläche im Verhältnis zur möglichen Flächenleistung der Arbeitsmaschine eine höher monetäre Bewertung der Flächenleistung und umgekehrt eine im Verhältnis zur möglichen Flächenleistung der Arbeitsmaschine geringe zu bearbeitende Fläche eine niedrigere monetäre Bewertung der Flächenleistung im Verhältnis zu den übrigen monetären Bewertungsgrößen bewirkt.

Zur Vermeidung witterungsbedingter Erntegutverluste wird In diesem Zusammenhang in einer weiteren Ausgestaltung vorgeschlagen, dass bei großer zu bearbeitender Restfläche und Schlechtwettervorhersage die Flächenleitung gegenüber den übrigen monetären Bewertungsgrößen monetär höher bewertet wird.

Die Genauigkeit der zu ermittelnden Opportunitätskosten wird auch dadurch weiter erhöht, wenn eine monetäre Bewertung der Wartungskosten in der Weise erfolgt, dass das Kostenrisiko einer verspäteten oder verfrühten Wartung bei der Ermittlung der Opportunitätskosten abgeschätzt und berücksichtigt wird.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung einer landwirtschaftlichen Arbeitsmaschine mit erfindungsgemäßem Assistenzsystem
- Figur 2: eine schematische Detailansicht des erfindungsgemäßen Assistenzsystems
- Figur 3: eine weitere Detailansicht des erfindungsgemäßen Assistenzsystems
- Figur 4: eine weitere Ausgestaltungsvariante des erfindungsgemäßen Assistenzsystems
- Figur 5: eine Ausgestaltungsvariante der Assistenzsysteme nach Figur 3 und 4

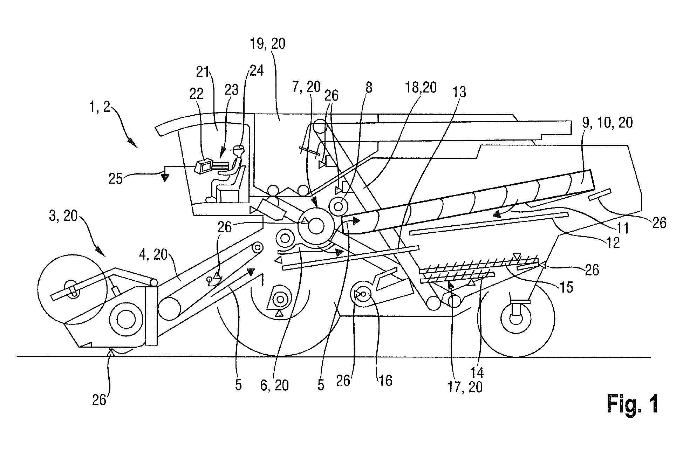

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird.

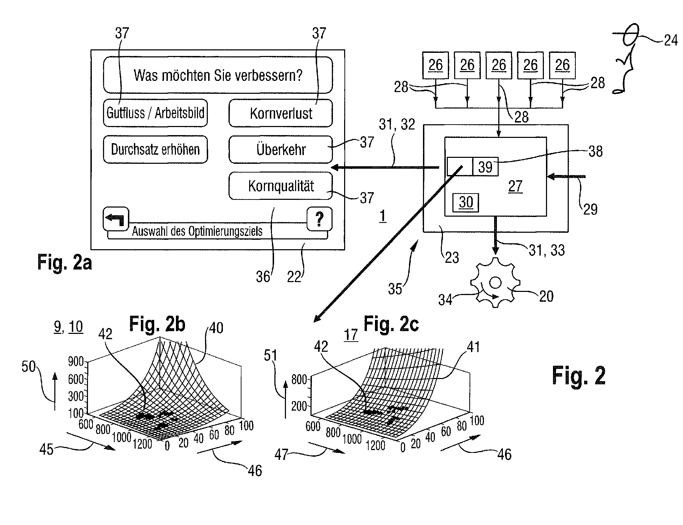

Fig. 2 zeigt eine schematische Darstellung der Anzeigeeinheit 22, der Steuer- und Regeleinrichtung 23 sowie die der Steuer- und Regeleinrichtung 23 zugeordnete und mit der Anzeigeeinheit 22 gekoppelte Recheneinheit 27. Die Recheneinheit 27 ist so beschaffen, dass sie neben den von den Sensorsystemen 26 generierten Informationen 28, externe Informationen 29 und in der Recheneinheit 27 selbst hinterlegte Informationen 30, wie etwa Expertenwissen, zu einer Vielzahl von Ausgangssignalen 31 verarbeiten kann. Die Ausgangssignale 31 sind dabei so beschaffen, dass sie zumindest Anzeigesteuersignale 32 und Arbeitsorgansteuersignale 33 umfassen, wobei erstere die Inhalte der Anzeigeeinheit 22 bestimmen und letztere die Änderung der unterschiedlichsten Arbeitsparameter 34 der Arbeitsorgane 20 der landwirtschaftlichen Arbeitsmaschine 1 bewirken, wobei Pfeil 34 symbolisch für die Dreschtrommeldrehzahl steht. Die Steuer- und Regeleinrichtung 23 mit der ihr zugeordneten Anzeigeeinheit 22 und der Recheneinheit 27 sind Bestandteil des erfindungsgemäßen und nachfolgend näher zu beschreibenden Assistenzsystems 35, dessen Anzeigeeinheit 22 in einem Anzeigebereich 36 eine interaktive, natürlichsprachige Kommunikation zwischen dem Bediener 24 und dem Assistenzsystem 35 zulässt. Das Assistenzsystem 35 ist dabei so beschaffen, dass es unter Berücksichtigung zumindest einer Auswahl der in der Recheneinheit 27 verfügbaren Informationen 28-30 kritische Arbeitsweisen der landwirtschaftlichen Arbeitsmaschine 1 dadurch überwinden oder abstellen kann, dass es einen oder mehrere Effizienzparameter 37 der landwirtschaftlichen Arbeitsmaschine 1 vorzugsweise mittels interaktiver natürlichsprachiger Kommunikation optimiert.

Damit die Arbeitsweise einer als Mähdrescher 2 ausgeführten landwirtschaftlichen Arbeitsmaschine 1 optimiert werden kann verfügt die Recheneinheit 27 in an sich bekannter Weise über einen Softwaremodul 38 in dem ein oder mehrere mathematische Modelle 39 hinterlegt sind, mittels derer der Arbeitsprozess der landwirtschaftlichen Arbeitsmaschine abgebildet und optimiert werden kann. Die mathematischen Modelle 39 sind zunächst in an sich bekannter Weise so beschaffen, dass sie eine Optimierung der noch näher zu beschreibenden Arbeits-und Effizienzparameter 34, 37 ermöglichen. Die Beschreibung des Arbeitsprozesses der landwirtschaftlichen Arbeitsmaschine 1 ist in Figur 2, untere Darstellung beispielhaft anhand eines den Abscheideprozess der als Trennrotor 9 ausgeführten Abscheideeinrichtung 10 beschreibenden Kennfeldes 40 veranschaulicht. Der von dem Kennfeld 40 beschriebene Abscheidungsprozess umfasst beispielsweise die sensorisch erfassten Abscheideverluste 50 als Ausgangsgröße in Abhängigkeit von dem Arbeitsparameter 34 Trennrotordrehzahl 45 sowie einer durchsatzabhängigen Größe wie der sensorisch erfassten Schichtdicke 46 im Schrägförderer 4. In analoger Weise kann die Beschreibung des Arbeitsprozesses der als Mähdrescher 2 ausgeführten landwirtschaftlichen Arbeitsmaschine 1 auch die Arbeitsweise einer Reinigungseinrichtung 17 umfassen. Dass den Arbeitsprozess der Reinigungseinrichtung 17 beschreibende Kennfeld 41 umfasst beispielsweise die sensorisch erfassten Reinigungsverluste 51 als Ausgangsgröße in Abhängigkeit von dem Arbeitsparameter 34 Reinigungsgebläsedrehzahl 47 sowie einer durchsatzabhängigen Größe wie der sensorisch erfassten Schichtdicke 46 im Schrägförderer 4. Es liegt im Rahmen der Erfindung, dass der Softwaremodul 38 eine Vielzahl den Arbeitsprozess einer landwirtschaftlichen Arbeitsmaschine 1 beschreibende Kennfelder umfassen kann. Beispielhaft sei hier noch die Beschreibung des Arbeitsprozesses der Drescheinrichtung 6,7 einer als Mähdrescher 2 ausgeführten landwirtschaftlichen Arbeitsmaschine 1 genannt.

Um das Ziel einer ausgewogenen Einstellung von Abscheidung und Reinigung zu erreichen, werden in an sich bekannter Weise beide Kennfelder 40, 41 herangezogen, um einen optimalen Arbeitspunkt 42 der Rotordrehzahl 34 aus den Abscheide- und Reinigungskennfeldern 40, 41 zu bestimmen, das heißt einen gemeinsamen Arbeitspunkt 42, an dem bei den aktuell vorherrschenden Erntebedingungen eine Minimierung der Verluste in der Trenneinrichtung 10 und der Reinigungseinrichtung 17 gegeben ist.

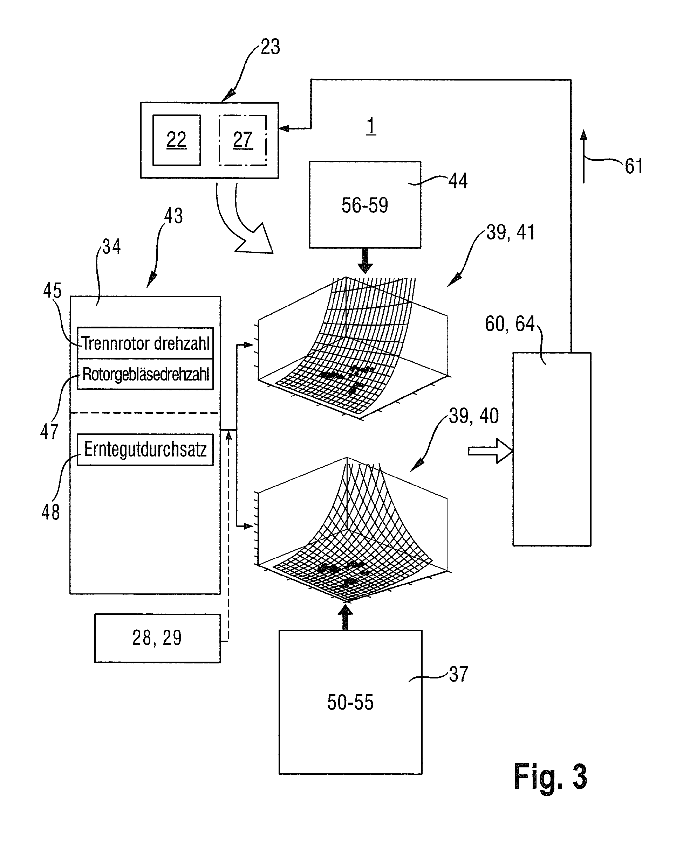

Die erfindungswesentlichen Aspekte des in Figur 2 beschriebenen Assistenzsystems 35 sind in Figur 3 beispielhaft dargestellt. In der der Steuer- und Regeleinrichtung 23 zugeordneten Recheneinheit 27 sind ein oder mehrere, den Arbeitsprozess der landwirtschaftlichen Arbeitsmaschine 1 beschreibende mathematische Modelle 39 hinterlegt. Gemäß den vorherigen Ausführungen umfassen die hinterlegten mathematischen Modelle 39 zumindest ein Kennfeld 41 zur Beschreibung des Arbeitsprozesses der Trenneinrichtung 10 sowie ein Kennfeld 40 zur Beschreibung des Arbeitsprozesses der Reinigungseinrichtung 17. Eingangsgrößen 43 der die jeweiligen Kennfelder 40, 41 generierenden mathematischen Modelle 39 bilden einerseits maschinenbezogene Arbeitsparameter 34, wie etwa die Drehzahl 45, 47 bestimmter Arbeitsorgane 20, und andererseits erntegutbezogene Arbeitsparameter 34, wie etwa der Erntegutdurchsatz 48, die Stroh- und Kornfeuchte sowie die Luftfeuchtigkeit. Unter Berücksichtigung dieser Arbeitsparameter 34 und gegebenenfalls weiterer externer und interner Informationen 28, 29 generieren die hinterlegten mathematischen Modelle 39 zunächst die Effizienzparameter 37. Sofern die landwirtschaftliche Arbeitsmaschine 1 als Mähdrescher 2 ausgeführt ist, können die Effizienzparameter 37 beispielsweise einen oder mehrere der Effizienzparameter 37 "Abscheideverlust" 50, "Reinigungsverlust" 51, "Kornsauberkeit" 52, "unausgedroschene Bestandteile im Korntank" 53, "Körnerbruch" 54 und "Kraftstoffverbrauch" 55 umfassen. In erfindungsgemäßer Weise berücksichtigen die hinterlegten mathematischen Zusammenhänge 39 zudem sogenannte monetäre Zusammenhänge 44, wobei die monetären Zusammenhänge 44 einer oder mehrere der Parameter "Preis des zu erntende Gutes" 56; "Kraftstoffpreis" 57; "Ertrag des geernteten Gutes" 58 und die "Flächenleistung der landwirtschaftlichen Arbeitsmaschine" 59 umfassen können. In erfindungsgemäßer Weise werden schließlich aus den ermittelten Effizienzparametern 37 unter Berücksichtigung der verfügbaren monetären Zusammenhänge 44 Bewertungsgrößen 60 in Form von sogenannten Opportunitätskosten 61 ermittelt und in der der Steuer- und Regeleinrichtung 23 zugeordneten Anzeigeeinheit 22 visualisiert.

Berücksichtigt man allein die genannten Effizienzparameter 37 bei der Optimierung des Arbeitsprozesses der als Mähdrescher 2 ausgeführten landwirtschaftlichen Arbeitsmaschine 1, dann ergibt sich eine effiziente Arbeitsweise immer dann, wenn die von der Trenneinrichtung 10 und der Reinigungseinrichtung 17 aus der Maschine geförderte Menge an Körnern, die sogenannten Abscheideverluste 50 und die Reinigungsverlust 51 gering sind, die Kornsauberkeit 52 dennoch hoch ist, die von der Reinigungseinrichtung 17 abgeschiedenen und in den Korntank 19 geförderten unausgedroschenen Bestandteile 53 gering sind, durch die Dreschorgane 7 ein geringer Körnerbruch 54 erzeugt und ein niedriger Kraftstoffverbrauch 55 erreicht wird. Bezüglich der beschriebenen monetären Zusammenhänge 44 gilt zunächst unabhängig von den tatsächlichen Kosten, dass ein niedriger Kraftstoffverbrauch, niedrige Kornverluste und entsprechend hohe tatsächlich geerntete Kornmengen sowie ein niedriger Bruchkornanteil die monetäre Bewertung des Arbeitsprozesses der landwirtschaftlichen Arbeitsmaschine 1 positiv beeinflussen. Aufgrund dessen, dass sich die Kosten des Kraftstoffes pro Liter oder Tonne von den Kosten des Getreides pro Liter oder Tonne unterscheiden, hängt ein kosteneffizienter Arbeitsprozess der landwirtschaftlichen Arbeitsmaschine maßgeblich von den Kosten des Kraftstoffes und des zu erntenden Gutes ab und kann mitunter ständigen Schwankungen unterliegen. Daher ist es für die Ermittlung eines kosteneffizienten Arbeitsprozesses der landwirtschaftlichen Arbeitsmaschine 1 von besonderer Bedeutung, den Einfluss der einzelnen Effizienzparameter 37 auf die Opportunitätskosten 61 zu bestimmen. In diesem Zusammenhang kann es auch von Bedeutung sein, dass die aktuellen Kraftstoff- und Getreidepreise über online verfügbare Datenbanken kontinuierlich bezogen werden.

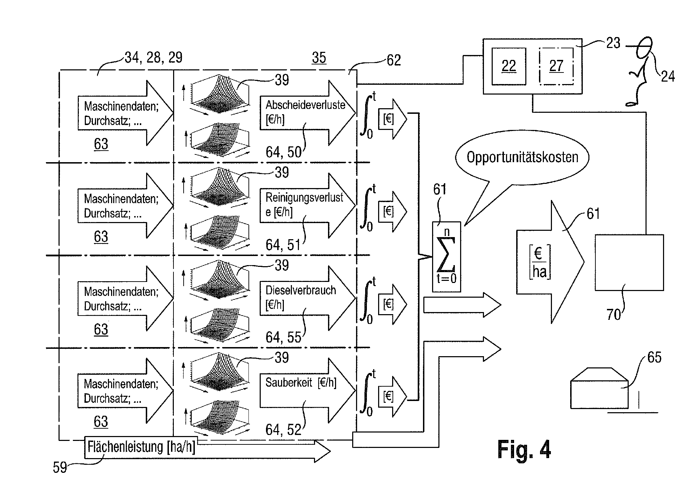

Gemäß Figur 4 ist das Assistenzsystem 35 daher so beschaffen, dass der Arbeitsprozess 62 der landwirtschaftlichen Arbeitsmaschine 1 in Teilarbeitsprozesse 63 unterteilt ist, wobei die Teilarbeitsprozesse 63 die Kornverluste 50, 51 in der Trenn - und Reinigungseinrichtung 10, 17, den Kraftstoffverbrauch 55 und die Kornsauberkeit 52 umfassen können. Die in der Recheneinheit 27 hinterlegten mathematischen Modelle 39 generieren jeweils zunächst Teilopportunitätskosten 64, etwa in Kosten pro Stunde, die in der Anzeigeeinheit 22 der Steuer- und Regeleinrichtung 23 visualiserbar sind, sodass der Bediener 24 einen Überblick über die Teilopportunitätskosten 64 erhält. Eine Aufsummierung der Teilopportunitätskosten 64 führt schließlich zu den Gesamtopportunitätskosten 61 des Arbeitsprozesses 62 der landwirtschaftlichen Arbeitsmaschine 1. Werden die Teilopportunitätskosten 64 oder die Gesamtopportunitätskosten 61 schließlich in Beziehung zur Flächenleistung 59 der landwirtschaftlichen Arbeitsmaschine 1 gesetzt ergeben sich schließlich die auf eine Fläche, hier Hektar, bezogenen Opportunitätskosten 61. Auf diese Weise können mittels der hinterlegten mathematischen Modelle 39 zumindest aus den Effizienzparametern 37 unter Berücksichtigung der die monetären Zusammenhänge 44 beschreibenden Parameter 56 - 59 (Figur 3) die Teilopportunitätskosten 64 und/oder die Gesamtopportunitätskosten 61 "Abscheidekornverlust in Kosten/Zeit- oder Flächeneinheit", "Reinigungskornverlust in Kosten/Zeit- oder Flächeneinheit", "Kornsauberkeit in Kosten/Zeit- oder Flächeneinheit", "Körnerbruch in Kosten/Zeit- oder Flächeneinheit" , "unausgedroschene Bestandteile im Korntank in Kosten / Zeit- oder Flächeneinheit" und "Kraftstoffverbrauch in Kosten/Zeit- oder Flächeneinheit" ermittelt und visualisiert werden.

Es liegt im Rahmen der Erfindung, dass die ermittelten Opportunitätskosten 61, 64 entweder vor Beginn des Arbeitsprozesses 62 der landwirtschaftlichen Arbeitsmaschine 1 in Form einer Simulation oder im laufenden Arbeitsprozess 62 kontinuierlich ermittelt werden, wobei sowohl bei Simulation als auch im Onlinebetrieb von den hinterlegten mathematischen Modellen 39 historische und/oder aktuelle Arbeitsparameter 34 und weitere interne und externe Informationen 28, 29 berücksichtigt werden. Damit das Assistenzsystem 35 sowohl für eine Vorabsimulation als auch im Onlinebetrieb einsetzbar ist, kann das Assistenzsystem 35 der landwirtschaftlichen Arbeitsmaschine 1 unmittelbar zugeordnet sein. Denkbar ist aber auch, dass das Assistenzsystem 35 einer stationären Einrichtung 65, etwa einem sogenannten Hof-PC zugeordnet ist. Obgleich das erfindungsgemäße Assistenzsystem 35 im hier beschriebenen Beispiel eine als Mähdrescher 2 ausgeführte landwirtschaftliche Arbeitsmaschine 1 betrifft und der zu optimierende Arbeitsprozess 62 ein Ernteprozess ist, ist die Erfindung nicht hierauf beschränkt. Die landwirtschaftliche Arbeitsmaschine 1 kann als beliebige landwirtschaftliche Arbeitsmaschine, etwa Feldhäcksler oder Traktor mit Anbaugerät ausgeführt sein und neben einem Ernteprozess einen beliebigen Arbeitsprozess 62 einer landwirtschaftlichen Arbeitsmaschine 1 betreffen, wobei dann die Opportunitätskosten 61, 64 anwendungsspezifisch andere als die hier genannten sein können. Zudem ist vorgesehen, dass das Assistenzsystem 35 unter Berücksichtigung der ermittelten Opportunitätskosten 61, 64 einen Vorschlag 70 zur Anpassung zumindest der Arbeitsparameter 34 der landwirtschaftlichen Arbeitsmaschine 1 generiert und in der Anzeigeeinheit 22 visualisiert.

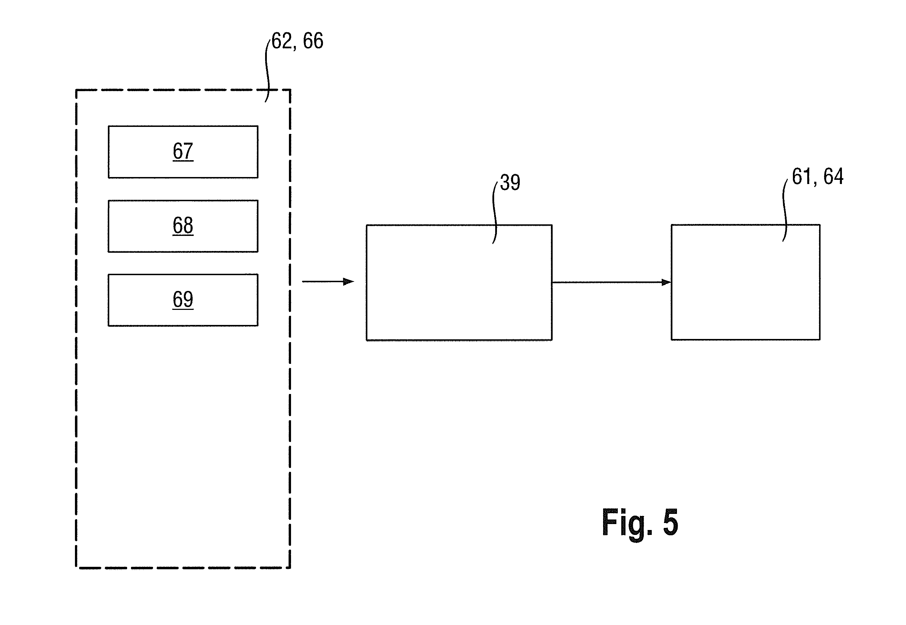

Gemäß Figur 5 können das oder die mathematischen Modelle 39 neben den bereits beschriebenen Parametern noch näher zu beschreibende einsatzspezifische Randbedingungen 66 des Arbeitsprozesses 62 berücksichtigen. Eine einsatzspezifische Randbedingung 66 kann das Verhältnis 67 von noch zu bearbeitender Fläche und möglicher Flächenleistung der Arbeitsmaschine 1 sein, wobei eine große noch zu bearbeitende Fläche im Verhältnis zur möglichen Flächenleistung der Arbeitsmaschine 1 eine höher monetäre Bewertung der Flächenleistung gegenüber den Arbeitsparametern 34 bewirkt. Auf diese Weise wird sichergestellt, dass das verfügbare tägliche Erntezeitfenster optimal genutzt wird und Rieselverluste aufgrund überreifen Getreides oder Ernteausfälle aufgrund von Schlechtwetterperioden reduziert werden. In Analogie hierzu kann eine im Verhältnis zur möglichen Flächenleistung der Arbeitsmaschine 1 geringe noch zu bearbeitende Fläche eine niedrigere monetäre Bewertung der Flächenleistung im Verhältnis zu den übrigen monetären Bewertungsgrößen 44 bewirken. In diesem Fall ist das verfügbare Erntezeitfenster entsprechend groß, sodass durch effizient eingestellte Arbeitsparameter 34 sowie einen optimierten Kraftstoffverbrauch 55 niedrigere Opportunitätskosten 61, 64 bewirkbar sind. Bei großer zu bearbeitender Restfläche und Schlechtwettervorhersage 68 kann die Flächenleistung gegenüber den übrigen monetären Bewertungsgrößen 44 monetär höher bewertet werden, da witterungsbedingte Ernteausfälle zum Teil erhebliche monetäre Einbußen nach sich ziehen. Eine weitere zu berücksichtigende Randbedingung 66 kann die monetäre Bewertung der Wartungskosten 69 sein, wobei hier das Kostenrisiko einer verspäteten oder verfrühten Wartung bei der Ermittlung der Opportunitätskosten 61, 64 abgeschätzt und berücksichtigt wird, wobei bei vorzeitiger Wartung die Wartungskosten auf eine niedrigere Maschinenleistung umgelegt werden müssen, während eine verspätete Wartung in der Regel dann zu Mehrkosten führt, wenn verschleißbedingt Maschinenteile ausfallen und Folgeschäden nach sich ziehen.

### Bezugszeichenliste:

| | | | |
|---|---|---|---|
| 1 | landwirtschaftliche Arbeitsmaschine | 31 | Ausgangssignal |
| 2 | Mähdrescher | 32 | Anzeigesignal |
| 3 | Getreideschneidwerk | 33 | Arbeitsorgansignal |
| 4 | Schrägförderer | 34 | Arbeitsparameter |
| 5 | Erntegutstrom | 35 | Assistenzsystem |
| 6 | Dreschkorb | 36 | Anzeigebereich |
| 7 | Dreschorgan | 37 | Effizienzparameter |
| 8 | Umlenktrommel | 38 | Softwaremodul |
| 9 | Trennrotor | 39 | mathematisches Modell |
| 10 | Trenneinrichtung | 40 | Kennfeld |
| 11 | Körner | 41 | Kennfeld |
| 12 | Rücklaufboden | 42 | optimierter Arbeitspunkt |
| 13 | Zuführboden | 43 | Eingangsgröße |
| 14 | Siebebene | 44 | monetäre Zusammenhänge |
| 15 | Siebebene | 45 | Trennrotordrehzahl |
| 16 | Gebläse | 46 | Schichtdicke |
| 17 | Reinigungseinrichtung | 47 | Rotorgebläsedrehzahl |
| 18 | Elevator | 48 | Erntegutdurchsatz |
| 19 | Korntank | 49 | |
| 20 | Arbeitsorgan | 50 | Abscheideverluste |
| 21 | Fahrzeugkabine | 51 | Reinigungsverluste |
| 22 | Anzeigeeinheit | 52 | Kornsauberkeit |
| 23 | Steuer- und Regeleinrichtung | 53 | unausgedroschene Bestandteile |
| 24 | Bediener | 54 | Körnerbruch |
| 25 | Bussystem | 55 | Kraftstoffverbrauch |
| 26 | Sensorsystem | 56 | Preis des zu erntenden Gutes |
| 27 | Recheneinheit | 57 | Kraftstoffpreis |
| 28 | interne Information | 58 | Ertrag des geernteten Gutes |
| 29 | externe Information | 59 | Flächenleistung |
| 30 | Information | 60 | Bewertungsgröße |
| 61 | Opportunitätskosten | | |
| 62 | Arbeitsprozess | | |
| 63 | Teilarbeitsprozess | | |
| 64 | Teilopportunitätskosten | | |
| 65 | stationäre Einrichtung | | |
| 66 | Randbedingung | | |
| 67 | Verhältnis Restfläche/Maschinenleistung | | |
| 68 | Schlechtwettervorhersage | | |
| 69 | Wartungskostenbewertung | | |
| 70 | Vorschlag | | |

## Patentansprüche

1. Assistenzsystem zur Optimierung des Betriebes einer selbstfahrenden eine Vielzahl von Arbeitsorganen umfassende landwirtschaftlichen Arbeitsmaschine, insbesondere Mähdrescher oder Feldhäcksler, zumindest eine Einrichtung zur Ermittlung von Arbeits- und Effizienzparametern der landwirtschaftlichen Arbeitsmaschine, eine Recheneinheit und zumindest eine Anzeigeeinheit umfassend, wobei die Recheneinheit von maschineninternen Sensorsystemen generierte Informationen, externe Informationen und in der Recheneinheit hinterlegbare Informationen verarbeitet,
**dadurch gekennzeichnet,**
**dass** in der Recheneinheit (27) ein oder mehrere, den Arbeitsprozess (62) der landwirtschaftlichen Arbeitsmaschine (1) beschreibende mathematische Modelle (39) hinterlegt sind , das oder die mathematischen Modelle (39) aus den verfügbaren Arbeitsparametern (34) Effizienzparameter (37) der Arbeitsmaschine (1) ableiten und unter Berücksichtigung monetärer Zusammenhänge (44) die Opportunitätskosten (61) des Arbeitsprozesses (62) ermitteln und die Opportunitätskosten (61) in der Anzeigeeinheit (22) visualisiert werden.

2. Assistenzsystem zur Optimierung des Betriebes einer selbstfahrenden eine Vielzahl von Arbeitsorganen umfassende landwirtschaftlichen Arbeitsmaschine nach Anspruch 1,
**dadurch gekennzeichnet, dass**
die Opportunitätskosten (61) im laufenden Arbeitsprozess (62) und/oder als Simulation vor Durchführung des Arbeitsprozesses (62) ermittelt werden.

3. Assistenzsystem zur Optimierung des Betriebes einer selbstfahrenden eine Vielzahl von Arbeitsorganen umfassende landwirtschaftlichen Arbeitsmaschine nach Anspruch 1 oder 2,
**dadurch gekennzeichnet, dass**
das der Arbeitsprozess (62) in Teilarbeitsprozesse (63) unterteilt ist und für jeden Teilarbeitsprozess (63) die Teilopportunitätskosten (64) und die aus der Summe der Teilopportunitätskosten (64) gebildeten Opportunitätskosten (61) ermittelt und visualisiert werden.

4. Assistenzsystem zur Optimierung des Betriebes einer selbstfahrenden eine Vielzahl von Arbeitsorganen umfassende landwirtschaftlichen Arbeitsmaschine nach Anspruch 3,
**dadurch gekennzeichnet, dass**
das Assistenzsystem (35) optimierte Arbeitsparameter (34) unter Berücksichtigung der ermittelten Teilopportunitätskosten (64) und/oder Gesamtopportunitätskosten (61) vorschlägt.

5. Assistenzsystem zur Optimierung des Betriebes einer selbstfahrenden eine Vielzahl von Arbeitsorganen umfassende landwirtschaftlichen Arbeitsmaschine nach Anspruch 1,
**dadurch gekennzeichnet, dass**
die hinterlegten mathematischen Modelle (39) historische und/oder aktuelle Arbeitsparameter (34) der landwirtschaftlichen Arbeitsmaschine (1) berücksichtigen.

6. Assistenzsystem zur Optimierung des Betriebes einer selbstfahrenden eine Vielzahl von Arbeitsorganen umfassende landwirtschaftlichen Arbeitsmaschine nach einem der vorhergehenden Ansprüche,
**dadurch gekennzeichnet, dass**
das Assistenzsystem (35) der landwirtschaftlichen Arbeitsmaschine (1) und/oder einer stationären Einrichtung (65) zugeordnet ist.

7. Assistenzsystem zur Optimierung des Betriebes einer selbstfahrenden eine Vielzahl von Arbeitsorganen umfassende landwirtschaftlichen Arbeitsmaschine nach Anspruch 1,
**dadurch gekennzeichnet, dass**
die landwirtschaftliche Arbeitsmaschine (1) als Erntemaschine (2) ausgeführt ist und der von dem oder den mathematischen Modellen (39) beschriebene Arbeitsprozess (62) der Ernteprozess ist.

8. Assistenzsystem zur Optimierung des Betriebes einer selbstfahrenden eine Vielzahl von Arbeitsorganen umfassende landwirtschaftlichen Arbeitsmaschine nach einem der vorhergehenden Ansprüche,
**dadurch gekennzeichnet, dass**
die Arbeitsparameter (34) Einstellparameter der landwirtschaftlichen Arbeitsmaschine (1) und den Erntegutdurchsatz (48) umfassen.

9. Assistenzsystem zur Optimierung des Betriebes einer selbstfahrenden eine Vielzahl von Arbeitsorganen umfassende landwirtschaftlichen Arbeitsmaschine nach einem der vorhergehenden Ansprüche,
**dadurch gekennzeichnet, dass**
die landwirtschaftliche Arbeitsmaschine (1) als Mähdrescher (2) ausgeführt ist und die Effizienzparameter (37) zumindest einen oder mehrere der Effizienzparameter "Abscheideverlust" (50), "Reinigungsverlust", (51) "Kornsauberkeit" (52), "unausgedroschene Bestandteile im Korntank" (53), "Körnerbruch" (54) und "Kraftstoffverbrauch" (55) umfassen.

10. Assistenzsystem zur Optimierung des Betriebes einer selbstfahrenden eine Vielzahl von Arbeitsorganen umfassende landwirtschaftlichen Arbeitsmaschine nach einem der vorhergehenden Ansprüche,
**dadurch gekennzeichnet, dass**
zur Beschreibung der monetären Zusammenhänge (44) einer oder mehrere der Parameter "Preis des zu erntende Gutes" (56); "Kraftstoffpreis" (57) ; "Ertrag des geernteten Gutes" (58) und die "Flächenleistung der landwirtschaftlichen Arbeitsmaschine" (59) berücksichtigt werden.

11. Assistenzsystem zur Optimierung des Betriebes einer selbstfahrenden eine Vielzahl von Arbeitsorganen umfassende landwirtschaftlichen Arbeitsmaschine nach einem der Ansprüche 9 und 10,
**dadurch gekennzeichnet, dass**
in dem oder den mathematischen Modellen (39) zumindest die Effizienzparameter (37) unter Berücksichtigung der die monetären Zusammenhänge (44) beschreibenden Parameter die Teilopportunitätskosten (64) und/oder die Gesamtopportunitätskosten (61) "Abscheideverlust in Kosten/Zeit- oder Flächeneinheit", "Reinigungsverlust in Kosten/Zeit- oder Flächeneinheit", "Kornsauberkeit in Kosten/Zeit- oder Flächeneinheit", "Körnerbruch in Kosten/Zeit- oder Flächeneinheit", "unausgedroschene Bestandteile im Korntank" in Kosten/Zeit- oder Flächeneinheit" und "Kraftstoffverbrauch in Kosten/Zeit- oder Flächeneinheit" ermittelt und sodann visualisiert werden.

12. Assistenzsystem zur Optimierung des Betriebes einer selbstfahrenden eine Vielzahl von Arbeitsorganen umfassende landwirtschaftlichen Arbeitsmaschine nach Anspruch 11,
**dadurch gekennzeichnet, dass**
die ermittelten Teilopportunitätskosten (64) zu den gesamten Arbeitsprozess (62) beschreibenden Opportunitätskosten (61) zusammengefasst werden.

13. Assistenzsystem zur Optimierung des Betriebes einer selbstfahrenden eine Vielzahl von Arbeitsorganen umfassende landwirtschaftlichen Arbeitsmaschine nach Anspruch 12,
**dadurch gekennzeichnet, dass**
die Teilopportunitätskosten (64) und/oder die den gesamten Arbeitsprozess (62) beschreibenden Opportunitätskosten (61) in Kosten pro Stunde oder Kosten pro bearbeitete Fläche visualisiert werden.

14. Assistenzsystem zur Optimierung des Betriebes einer selbstfahrenden eine Vielzahl von Arbeitsorganen umfassende landwirtschaftlichen Arbeitsmaschine nach einem der vorhergehenden Ansprüche,
**dadurch gekennzeichnet, dass**
das oder die mathematischen Modelle (39) einsatzspezifische Randbedingungen (66) des Arbeitsprozesses (62) berücksichtigen.

15. Assistenzsystem zur Optimierung des Betriebes einer selbstfahrenden eine Vielzahl von Arbeitsorganen umfassende landwirtschaftlichen Arbeitsmaschine nach Anspruch 14,
**dadurch gekennzeichnet, dass**
eine einsatzspezifische Randbedingung (66) das Verhältnis (67) von zu bearbeitender Fläche und möglicher Flächenleistung der Arbeitsmaschine (1) ist, wobei eine große zu bearbeitende Fläche im Verhältnis zur möglichen Flächenleistung (59) der Arbeitsmaschine (1) eine höher monetäre Bewertung der Flächenleistung (59) und umgekehrt eine im Verhältnis zur möglichen Flächenleistung (59) der Arbeitsmaschine (1) geringe zu bearbeitende Fläche eine niedrigere monetäre Bewertung der Flächenleistung (59) im Verhältnis zu den übrigen monetären Bewertungsgrößen (44) bewirkt.

16. Assistenzsystem zur Optimierung des Betriebes einer selbstfahrenden eine Vielzahl von Arbeitsorganen umfassende landwirtschaftlichen Arbeitsmaschine nach Anspruch 14,
**dadurch gekennzeichnet, dass**
bei großer zu bearbeitender Restfläche und Schlechtwettervorhersage (68) die Flächenleistung (59) gegenüber den übrigen monetären Bewertungsgrößen (44) monetär höher zu bewerten ist.

17. Assistenzsystem zur Optimierung des Betriebes einer selbstfahrenden eine Vielzahl von Arbeitsorganen umfassende landwirtschaftlichen Arbeitsmaschine nach Anspruch 14,
**dadurch gekennzeichnet, dass**
das eine monetäre Bewertung der Wartungskosten (69) in der Weise erfolgt, dass das Kostenrisiko einer verspäteten oder verfrühten Wartung bei der Ermittlung der Opportunitätskosten (61, 64) abgeschätzt und berücksichtigt wird.
